(19) Europäisches Patentamt
European Patent Office
Office européen des brevets

(11) **EP 2 903 581 B1**

(12) **EUROPÄISCHE PATENTSCHRIFT**

(45) Veröffentlichungstag und Bekanntmachung des Hinweises auf die Patenterteilung:
**22.04.2020 Patentblatt 2020/17**

(21) Anmeldenummer: **13798549.5**

(22) Anmeldetag: **02.10.2013**

(51) Int Cl.:
*A61H 19/00* *(2006.01)*     *A61H 23/02* *(2006.01)*

(86) Internationale Anmeldenummer:
**PCT/DE2013/100349**

(87) Internationale Veröffentlichungsnummer:
**WO 2014/053123 (10.04.2014 Gazette 2014/15)**

(54) **STEUERANORDNUNG ZUR STEUERUNG DER INTENSITÄT DER MASSAGEBEWEGUNG EINES MASSAGEGERÄTES SOWIE MASSAGEGERÄT MIT EINER SOLCHEN STEUERANORDNUNG**

CONTROL ASSEMBLY FOR CONTROLLING THE INTENSITY OF THE MASSAGING MOTION OF A MASSAGE DEVICE, AND MASSAGE DEVICE COMPRISING A CONTROL ASSEMBLY OF THIS TYPE

DISPOSITIF DE COMMANDE DE L'INTENSITÉ DU MOUVEMENT DE MASSAGE D'UN APPAREIL DE MASSAGE, ET APPAREIL DE MASSAGE DOTÉ D'UN DISPOSITIF DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.10.2012 DE 102012109396**

(43) Veröffentlichungstag der Anmeldung:
**12.08.2015 Patentblatt 2015/33**

(73) Patentinhaber: **Knyrim, Jörg**
**76133 Karlsruhe (DE)**

(72) Erfinder: **Knyrim, Jörg**
**76133 Karlsruhe (DE)**

(74) Vertreter: **Glück Kritzenberger Patentanwälte PartGmbB**
**Hermann-Köhl-Strasse 2a**
**93049 Regensburg (DE)**

(56) Entgegenhaltungen:
EP-A1- 2 364 687       DE-A1- 4 426 446
DE-U1- 20 005 475       US-A1- 2009 306 467

**Beschreibung**

Die Erfindung betrifft ein Massagegerät mit einer Steueranordnung zur Steuerung der Intensität der Massagebewegung.

Massagegeräte zur sexuellen Stimulation eines weiblichen oder männlichen Geschlechtsteils oder zum Training des Beckenbodens sind hinreichend aus dem Stand der Technik bekannt. Insbesondere sind Massagegeräte bekannt, die in Körperhöhlen einführbar sind und einem männlichem Glied nachempfunden sind. Diese sind vorzugsweise stabförmig ausgebildet und weisen einen Kopfteil mit zumindest einem Massageabschnitt auf, in dem eine Massagebewegung zur sexuellen Stimulation des weiblichen Geschlechtsteils erzeugt wird. Ferner umfassen derartige Massagegeräte zumindest eine vorzugsweise elektrische betriebene Antriebseinheit zur Erzeugung der Massagebewegung im Massageabschnitt des Kopfteils.

Auch sind Massagegeräte zur sexuellen Stimulation des männlichen Geschlechtsteils, insbesondere eines menschlichen Penis bekannt. Ziel derartiger Massagegeräte ist es das männliche Geschlechtsteil mit entsprechenden Vibrationen zu beaufschlagen und hierdurch eine Erregung des männlichen Geschlechtsteils zu erreichen. Vorzugsweise bilden derartige Massagegeräte einen Körperhöhlen nachbildenden Aufnahmeraum auf, dessen umgebende Wandung mittels entsprechender Massagebewegungen das im Aufnahmeraum aufgenommene männliche Geschlechtsteils beaufschlagt.

Genannte Massagegeräte weisen häufig elektrisch betriebene Antriebseinheiten, vorzugsweise Elektromotoreinheiten auf, die über eine im Massagegerät vorgesehene Energieversorgungseinheit, insbesondere eine Batterie- oder Akkueinheit mit elektrischer Energie versorgt werden. Bekanntermaßen ist die elektrische Leistung einer derartigen Elektromotoreinheit von der Versorgungsspannung und der Stromaufnahme abhängig, wobei bei einer mechanischen Belastung der Elektromotoreinheit bei gleichbleibender Versorgungsspannung die Stromaufnahme und damit die elektrische Leistungsaufnahme ansteigen. Die mechanische Leistung einer Elektromotoreinheit ist aufgrund der Umsetzungsverluste von elektrischer Energie in mechanische Energie, insbesondere den hierbei auftretenden Reibungsverlusten immer geringer als die zugeführte elektrische Leistung, wobei die mechanische Leistung durch das Drehmoment und die Drehzahl bestimmt sind. Die während des Massageprozess auf die Antriebwelle der Elektromotoreinheit einwirkenden mechanischen Kräfte führen zu einer Erhöhung der elektrischen Leistungsaufnahme und zu einer Erhöhung der Stromaufnahme der Elektromotoreinheit, wodurch bei üblicherweise gleichbleibender Betriebsspannung die erzeugte mechanische Leistung abnimmt und damit die Massagebewegung nachteilig an Intensität verliert.

Aus der europäischen Patentanmeldung EP 2 364 687A1 ist beispielsweise ein Massagegerät zur sexuellen Stimulation des weiblichen Geschlechtsteils bekannt, welches eine Hauptvibratoreinheit und eine Hilfsvibratoreinheit aufweist, bei der die Intensität zumindest eines der Vibratoreneinheiten abhängig von der Eindringtiefe des Massagegerätes in die menschliche Körperhöhle gesteuert wird. Hierzu sind entlang der Längsachse des stabförmig ausgebildeten Massagegerätes mehrere Sensorelemente beabstandet voneinander angeordnet, welche bei Vorliegen eines Kontaktes der Wandung des Massagekopfabschnittes des Massagegerätes mit der diese umgebenden Körperhöhle ein Sensorsignal liefern, wobei die Leistung einer der eine Elektromotoreinheit aufweisenden Vibratoreneinheiten abhängig von der Anzahl der vorliegenden Sensorsignale, d.h. der Eindringtiefe des Massagegerätes in die Körperhöhle gesteuert wird.

Ferner wird in der US 2009/0306467 A1 ein Verfahren und eine zugehörige Vorrichtung beschrieben, um eine Erektion des männlichen Gliedes zu bewirken bzw. aufrechtzuerhalten. Hierzu ist Vorrichung als "Vibrator" ausgebildet, welcher ein Gehäuse aufweist, in dem eine Elektromotoreinheit aufgenommen ist, die über eine Antriebsmechanik mit einem im Querschnitt pilzförmigen Vibrationselement verbunden ist. Das pilzförmige Vibrationselement bildet eine kreisförmige Anlagefläche für das zu massierende männliche Glied aus. Ferner ist eine elektronische Steuerschaltung zur Ansteuerung der Elektromotoreinheit im Gehäuse aufgenommen, über welche u.a. ein vorgegebene Vibrationsfrequenz geregelt wird. Nachteilig ermöglicht die Vorrichtung keine benutzerindividuelle Steuerung der Intensität der Vibrationsbewegung.

Aus der DE 200 050 475 U1 ist ein Massagegerät mit einem in ein Gehäuse integrierten Motor bekannt, bei dem mittels einer Welle die Motorbewegung auf einen aufsteckbaren Behandlungskopf übertragbar ist. Das Massagegerät weist ferner Mittel zur Messung der Drehzahl des Motors und einer entsprechenden Regelung dessen auf.

Die EP 2 364 687 A1 betrifft ein interaktives Massagegerät, welches über eine Vielzahl von Näherungssensoreinheiten verfügt, die entlang der Massagefläche verteilt angeordnet sind. Abhängig von den von den Näherungssensoreinheiten erfassten Messwerten wird das Vibrationsverhalten des Massagegerätes gesteuert, und zwar bei Erfassen eines Körperkontaktes die Vibrationsbewegung angeschaltet und bei einem fehlenden Kontakt zum Körper wieder ausgeschaltet.

Ausgehend davon liegt der Erfindung die Aufgabe zugrunde, ein Massagegerät mit einer Steueranordnung zur Steuerung der Intensität der Massagebewegung des Massagegerätes anzugeben, welches die Nachteile des Standes der Technik beseitigt, und insbesondere eine von der bei der Massage entstehenden direkten oder indirekten mechanischen Krafteinwirkung auf die Antriebswelle der Elektromotoreinheit abhängigen Steuerung der Intensität der Massagebewegung zu ermöglichen. Die Aufgabe wird durch die Merkmale des Patentanspruches 1 gelöst.

Der wesentliche Aspekt des erfindungsgemäßen Massagegerätes mit einer Steueranordnung ist darin zu sehen, dass die Steueranordnung ausgelegt ist, als Massagebewegung die Intensität der Bewegung und/oder Verformung und/oder Vibration der in direkten oder indirekten Wirkverbindung mit der jeweiligen Elektromotoreinheit stehenden Wandung die aktuelle elektrische Leistungsaufnahme zumindest der ersten Elektromotoreinheit periodisch oder kontinuierlich zu ermitteln und die ermittelte elektrische Leistungsaufnahme mit zumindest einer vorgegebenen Referenzleistungsaufnahme zu vergleichen und abhängig davon die Intensität der durch die zweite Elektromotoreinheit erzeugten Massagebewegung zu steuern, wobei hierbei ausgehend von einer Grundintensität entsprechend dem aktuellen Massageverhalten des Benutzers die Intensität der durch die zweite Elektromotoreinheit erzeugte Massagebewegung abhängig von der Belastung der ersten Elektromotoreinheit entweder erhöht oder erniedrigt wird, und zwar stufenartig oder kontinuierlich. Besonders vorteilhaft wird durch das erfindungsgemäße Massagegerät bei einer Belastung der ersten Elektromotoreinheit des Massagegerätes durch den Benutzer ausgeübten Druck auf dessen Wandung - sei es durch Erhöhung des Anpressdruckes und/oder die Erhöhung der Eindringtiefe bedingt - eine Steuerung der Intensität der durch die zweite Elektromotoreinheit erzeugten Massagebewegung durchgeführt. Besonders vorteilhaft kann der Nutzer damit die Intensität des Massagegerätes an die benutzerindividuellen Massagebedürfnisse anpassen und damit nach seinen persönlichen Bedürfnissen die sexuelle Stimulation der Geschlechtsorgane beeinflussen. Auch kann die Intensität sowohl der durch die erste als auch der durch die zweite Elektromotoreinheit erzeugten Massagebewegung abhängig vom Vergleichsergebnis gesteuert werden.

In einer besonders vorteilhaften Ausführungsvariante wird die Änderung der elektrischen Leistungsaufnahme der ersten Elektromotoreinheit, die durch die bei der Massage entstehende direkte oder indirekte mechanische Krafteinwirkung auf die erste Elektromotoreinheit hervorgerufen wird, zur Bestimmung der Änderung der Intensität der durch die zweite Elektromotoreinheit erzeugten Massagebewegung ausgewertet. Beispielsweise wird als Betriebsparameter die Amplitude einer durch eine Gleichspannung gebildeten Betriebsspannung der zweiten Elektromotoreinheit erhöht oder erniedrigt. Alternativ kann als Betriebsparameter das An- zu Ausverhältnis einer pulsweitenmodulierten Betriebsspannung der zweiten Elektromotoreinheit geändert werden.

Weiterhin vorteilhaft wird zur Steuerung der Intensität der durch die zweite Elektromotoreinheit erzeugten Massagebewegung abhängig vom Vergleichsergebnis der ermittelten elektrischen Leistungsaufnahme mit der zumindest einen vorgegebenen Referenzleistungsaufnahme zumindest ein Betriebsparameter der zumindest einen zweiten Elektromotoreinheit geändert. Bevorzugt wird als Betriebsparameter die Betriebsspannung der zweiten Elektromotoreinheit erhöht oder erniedrigt, vorzugsweise bei Verwendung einer als Gleichspannung ausgebildeten Betriebsspannung. In einer alternativen Ausführungsvariante findet eine pulsweitenmodulierte Betriebsspannung Verwendung, deren Verhältnis aus Aus- und Anzeiten zur Steuerung der Intensität geändert wird.

Erfindungsgemäß wird als Massagebewegung die Intensität der Bewegung und/oder Verformung und/oder Vibration der in direkten oder indirekten Wirkverbindung mit zumindest der zweiten Elektromotoreinheit stehenden Wandung gesteuert.

Vorteilhaft wird zur Ermittlung der aktuellen elektrischen Leistungsaufnahme die aktuelle Stromaufnahme der ersten Elektromotoreinheit ermittelt. Alternativ hierzu kann der effektive Innenwiderstand der ersten Elektromotoreinheit oder die Drehzahl der ersten Elektromotoreinheit zur Ermittlung der aktuellen elektrischen Leistungsaufnahme ermittelt und ausgewertet werden. Vorteilhaft kann die Drehzahl der ersten Elektromotoreinheit über eine in Wirkverbindung mit der ersten Elektromotoreinheit stehende Drehzahlsensoreinheit ermittelt werden. Auch kann zur Ermittlung der aktuellen elektrischen Leistungsaufnahme beim Betrieb der ersten Elektromotoreinheit mittels einer pulsweitenmodulierten Betriebsspannung in den Auszeiten die von der ersten Elektromotoreinheit erzeugte Gegenspannung ermittelt und zur Bestimmung der Drehzahl ausgewertet werden.

Ebenfalls kann abhängig vom Vergleichsergebnis zumindest die zweite Elektromotoreinheit in einem der ermittelten elektrischen Leistungsaufnahme zugeordneten Betriebsmodus zumindest zweier Betriebsmodi betrieben werden, wobei einem Betriebsmodus zumindest eine an diesen angepasste Referenzleistungsaufnahme zugeordnet ist.

Weiterhin vorteilhaft wird bei einer Energieversorgung des Massagegerätes mittels einer Batterieeinheit oder einer Akkueinheit der Spannungsabfall oder die aktuell bereitgestellte Spannung der Batterieeinheit oder der Akkueinheit zur Ermittlung der aktuellen Leistungsaufnahme der Elektromotoreinheit ausgewertet.

Vorteilhaft weist die Steueranordnung eine Verstärkerschaltung zur Steuerung der Intensität der Massagebewegung des Massagegerätes auf.

Weiterhin vorteilhaft kann die Steueranordnung zumindest eine vorzugsweise drahtlose Datenschnittstelle, beispielsweise eine Funkdatenschnittstelle zum Ausstauch von Betriebsdaten und zur davon abhängigen Steuerung der Intensität der Massagebewegung eines weiteren Massagegerätes aufweisen.

In einer Ausführungsvariante weist die Steueranordnung eine Mikrokontrollereinheit zur Ausführung einer Steuerroutine zur Steuerung der Intensität der Massagebewegung eines Massagegerätes auf.

Zudem ergeben sich Weiterbildungen, Vorteile und Anwendungsmöglichkeiten der Neuerung auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Neuerung, unabhängig von ihrer Zusammenfassung in den Ansprüchen oder deren Rückbeziehung. Auch wird der Inhalt der Ansprüche zu einem Bestandteil der Beschreibung gemacht. Es zeigen:

Fig. 1    beispielhaft einen schematischen Längsschnitt durch ein stabförmiges Massagegerät zur Stimulation des weiblichen Geschlechtsteils mit einer erfindungsgemäßen Steueranordnung,

Fig. 2    beispielhaft einen schematischen Längsschnitt durch eine höhlenartige Ausnehmung aufweisenden Massagegerätes zur Stimulation des männlichen Geschlechtsteils mit einer erfindungsgemäßen Steueranordnung und

Fig. 3    beispielhaft ein schematisches Schaltbild einer Ausführungsform der Steueranordnung.

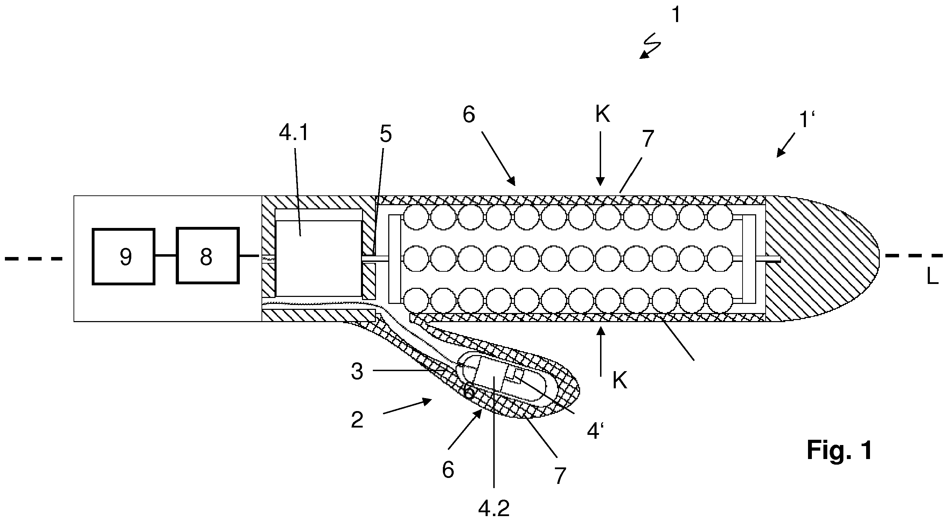

In Figur 1 ist beispielsweise ein stabförmiges Massagegerät 1 mit um die Längsachse L des Massagegerätes 1 rotierenden Kugelelementen dargestellt, wobei die Kugelelemente entlang mehrerer sich entlang der Längsachse L erstreckenden Haltestangenelementen aufgereiht sind. Die Haltestangenelemente verlaufen konzentrisch zur Längsachse L. Das stabförmige Massagegerät 1 ist zur Einführung in Körperhöhlen, insbesondere zur Stimulation der weiblichen Geschlechtsorgane bestimmt.

Die beschriebene Antriebsvorrichtung wird durch eine erste Elektromotoreinheit 4.1 um eine achsgleich mit der Längsachse L verlaufende Drehachse angetrieben. Durch die Rotation der Kugelelemente um die Drehachse bzw. Längsachse L wird eine Massagebewegung im Bereich des freien Endes 1' des Massagerätes erzeugt. Ferner umfasst das Massagegerät 1 gemäß Figur 1 eine Vibratoreinheit 2 zur Erzeugung einer zusätzlichen Massagebewegung, insbesondere einer Vibrationsbewegung im Bereich der weiblichen Klitoris. Die Vibratoreinheit 2 weist beispielhaft eine in einem Gehäuse 3 aufgenommene zweite Elektromotoreinheit 4.2 mit Unwuchtelement 4.2' auf. Es versteht sich, dass die Erfindung keinesfalls auf diese Ausführungsform der dargestellten Vibratoreinheit 2 beschränkt ist, sondern auch diverse weitere Realisierungsformen einer derartigen Vibratoreinheit 2 mit Elektromotoreinheit 4.2 Verwendung finden können.

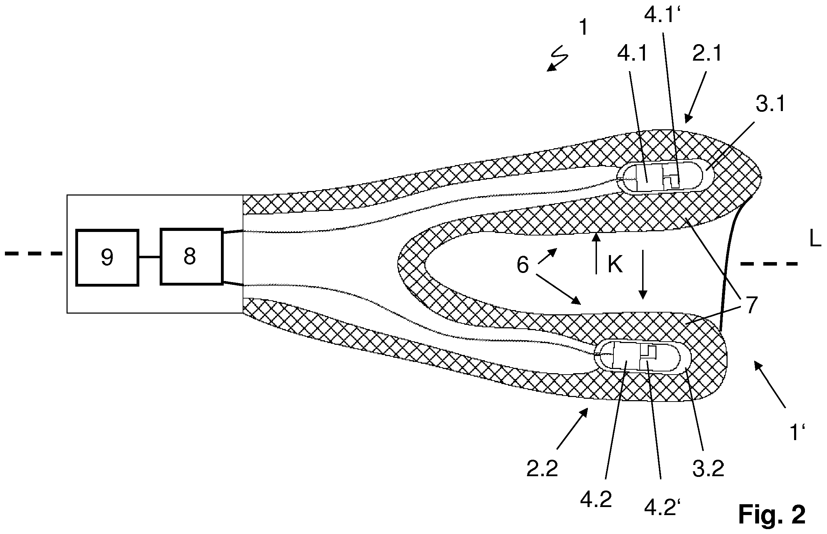

Figur 2 zeigt beispielhaft ein zur Stimulation des männlichen Geschlechtsteils ausgebildetes Massagegerät 1 mit einer zur Erzeugung einer Massagebewegung vorgesehenen ersten und zweiten Vibratoreinheit 2.1, 2.2, die wiederum eine in einem Gehäuse 3.1, 3.2 aufgenommene erste und zweite Elektromotoreinheit 4.1, 4.2 mit jeweils einem Unwuchtelement 4.1', 4.2' umfasst. Der durch das Massagegerätes 1 gebildete körperhöhlenartige Aufnahmeraum ist zur Stimulation des männlichen Geschlechtsteils vorgesehen.

Den Ausführungsvarianten in den Figuren 1 und 2 ist gemein, dass zumindest eine erste Elektromotoreinheit 4.1 zur Erzeugung einer Drehbewegung eines Unwuchtelementes 4.1' bzw. einer Antriebswelle 5 vorgesehen sind. Die Drehbewegung des Unwuchtelementes 4.1' bzw. der Antriebswelle 5 wird entweder direkt oder indirekt in eine Massagebewegung, insbesondere auch Vibrationsbewegung des Massagegerätes 1 umgewandelt. Hierzu umfasst das jeweilige Massagegerät 1 zumindest einen vorzugsweise länglichen Massageabschnitt 6, der zumindest eine die Außenfläche des Massageabschnittes 6 bildende Wandung 7 aufweist. Die Wandung 7 ist beispielsweise aus einem elastischen oder teilelastischen Material, beispielsweise Kunststoff- oder Schaumstoffmaterial gebildet.

Zur Erzeugung der Massagebewegung steht die Wandung 7 direkt oder indirekt mit der jeweiligen Vibratoreinheit 2, 2.1, 2.2 bzw. dem Gehäuse 3, 3.1, 3.2 der Vibratoreinheit 2, 2.1, 2.2 oder mit der Elektromotoreinheit 4.1, 4.2 in Wirkverbindung. Die erste und zweite Elektromotoreinheit 4.1, 4.2 sind jeweils über elektrische Leitungen mit einer Steueranordnung 8 verbunden, welche wiederum mit einer Energieversorgungseinheit 9 zur Bereitstellung einer Betriebsspannung U ausgebildet ist, die zum Betrieb der ersten und zweiten Elektromotoreinheiten 4.1, 4.2 vorgesehen ist und die vorzugsweise über die Steueranordnung 8 gesteuert wird.

Ferner könnten zusätzlich Anzeigemittel und/oder Schaltmittel mit der Steueranordnung 8 verbunden sein (in Figur 1 und 2 nicht dargestellt). Die Anzeigemittel können beispielsweise in Form einer Displayeinheit und/oder Leuchtmittel wie Leuchtdioden und/oder Lautsprecher gebildet sein, die den aktuellen Betriebzustand des Massagegerätes 1 und/oder die aktuell abgegebene Intensität der Massagebewegung visuell und/oder akustisch anzeigen. Mittels der Schaltmittel ist ein An- und Ausschalten der Antriebseinheit an sich sowie ggf. die Auswahl unterschiedlicher Massageintensitäten und/oder durch die Steueranordnung 8 bereitgestellter Massageprogramme möglich.

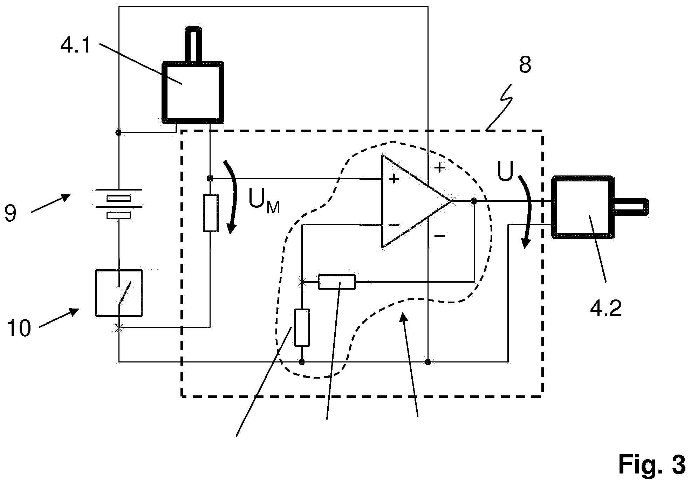

Die Steueranordnung 8 besteht abhängig von der Komplexität der Steuer- und/oder Regelaufgaben aus einer elektronischen Schaltung umfassend mehrere elektronische Bauteile wie zumindest eine Verstärkerschaltung mit geeigneter Beschaltung. Ggf. kann eine Mikrokontrollereinheit mit zugeordneter, insbesondere integrierter Speichereinheit vorgesehen sein. Fig. 3 zeigt beispielhaft einen Schaltplan einer Ausführungsvariante der Steueranordnung 8.

Bei dem erfindungsgemäßen Verfahren zur Regelung der Intensität der Massagebewegung eines Massagegerätes 1 umfassend zumindest einen länglichen Massageabschnitt 6 mit zumindest einer die Außenfläche des Massageabschnittes 6 bildenden Wandung 7 und zumindest einer ersten elektrischen Antriebseinrichtung mit einer ersten Elektromotoreinheit 4.1 und zumindest einer zweiten elektrischen Antriebseinrichtung mit einer zweiten Elektromotoreinheit 4.2 wird mittels der Steueranordnung 8 die aktuelle elektrische Leistungsaufnahme LA zumindest der ersten Elektromotoreinheit 4.1 periodisch oder kontinuierlich ermittelt. Die ermittelte elektrische Leistungsaufnahme LA wird anschließend mit zumindest einer vorgegebenen Referenzleistungsaufnahme RLA verglichen und abhängig davon die Intensität der durch die zweite Elektromotoreinheit 4.2 erzeugten Massagebewegung gesteuert. Bevorzugt wird die Änderung der elektrischen Leistungsaufnahme LA der ersten Elektromotoreinheit 4.1, die durch die bei der Massage entstehende direkte oder indirekte Krafteinwirkung K auf die erste Elektromotoreinheit 4.1 hervorgerufen wird, zur Bestimmung der Änderung der Intensität der durch die zweite Elektromotoreinheit 4.2 erzeugten Massagebewegung ausgewertet. Die während der Massage durch den Benutzer erzeugte mechanische Krafteinwirkung K ist in den Figuren 1 und 2 anhand von Pfeilen beispielhaft angedeutet. Dies bewirkt eine Änderung der Belastung der ersten Elektromotoreinheit 4.1, welche zu einer Änderung der elektrischen Leistungsaufnahme LA führt, die zur Steuerung der Intensität der durch die zweite Elektromotoreinheit 4.2 Massagebewegung ausgewertet wird.

Besonders bevorzugt wird zur Steuerung der Intensität der Massagebewegung des Massagegerätes 1 zumindest ein Betriebsparameter der zweiten Elektromotoreinheit 4.2 geändert, und zwar die zum Betrieb der zweiten Elektromotoreinheit 4.2 vorgesehene Betriebsspannung U. Durch beispielsweise eine Erhöhung der Betriebsspannung U der zweiten Elektromotoreinheit 4.2 kann die Intensität der Massagebewegung des Massagegerätes 1 erhöht werden und an die aktuellen Massagebedürfnisse angepasst werden. Entsprechend führt eine Reduzierung der Betriebsspannung U zu einer Verringerung der Intensität der Massagebewegung. Daraus resultiert eine deutlich verbesserte, insbesondere auf die jeweils aktuellen Massagebedürfnisse des Nutzers abgestimmte sexuelle Stimulation des jeweiligen Geschlechtsteils. Auch kann in einer alternativen Ausführungsvariante eine Anpassung der Betriebsspannung sowohl der ersten als auch der zweiten Elektromotoreinheit 4.1, 4.2 erfolgen.

Die erfindungsgemäße Steuerung der Intensität der Massagebewegung eines Massagegerätes 1 beruht prinzipiell auf der Änderung der Leistungsbilanz der ersten Elektromotoreinheit 4.1, welche sich formelmäßig wie folgt beschreiben lässt:

$$U \times I = I \times I \times R + c \times I \times 2 \times \pi \times n \quad \text{bzw.}$$
$$U = I \times R + c \times 2 \times \pi \times n \quad \text{mit}$$

U = Betriebsspannung in V (Volt)

I = Stromaufnahme in A (Ampere)

R = ohmscher Widerstand der Ankerwicklung in Ohm

c = Maschinenkonstante in Vs

n = Drehzahl pro Sekunde in 1/s

Hierbei beschreibt das Produkt U x I die elektrischen Leistungsaufnahme LA der ersten Elektromotoreinheit 4.1 und das Produkt, wobei das Produkt I x I x R die elektrische Verlustleistung der ersten Elektromotoreinheit 4.1 angibt und das Produkt c x I x 2 x $\pi$ x n die bereitgestellte mechanische Leistung angibt, die sich ihrerseits aus mechanischer Verlustleistung wie zum Beispiel Reibung, Luftwiderstand usw. und der tatsächlich abgreifbaren mechanischen Nutzleistung zusammensetzt. Bei der Maschinenkonstante c handelt es sich um einen maschinenspezifischen Parameter der jeweiligen ersten Elektromotoreinheit 4.

Insbesondere setzt sich die Betriebsspannung U aus der in der ersten Elektromotoreinheit 4.1 induzierten Gegenspannung Ui und der wirkenden Spannung Uw zusammen, wobei die wirkende Spannung Uw dem Produkt I x R entspricht. Die induzierte Gegenspannung Ui lässt sich damit formelmäßig wie folgt beschreiben:

$$Ui = U - Uw = U - I \times R = c \times 2 \times \pi \times n$$

Damit ist die induzierte Gegenspannung Ui proportional zu Drehzahl n der ersten Elektromotoreinheit 4.1.

Somit kann aus der aktuellen Stromaufnahme I und der vorgegebenen Betriebsspannung U bei bekanntem Widerstand R der Ankerwicklung die induzierte Gegenspannung Ui bestimmt werden, welche direkt proportional zur Drehzahl n ist.

Zur Ermittlung der aktuellen elektrischen Leistungsaufnahme LA kann damit beispielsweise die Drehzahl der ersten Elektromotoreinheit 4.1 ermittelt und ausgewertet werden, und zwar vorzugsweise mittels einer in Wirkverbindung mit der ersten Elektromotoreinheit 4.1 stehenden, in den Figuren nicht dargestellten Drehzahlsensoreinheit oder beim Betrieb der ersten Elektromotoreinheit 4.1 mittels einer pulsweitenmodulierten Betriebsspannung U durch Ermittlung und Auswertung einer in den Auszeiten von der ersten Elektromotoreinheit 4 erzeugten Gegenspannung.

Unter einer Massagebewegung wird hierbei abhängig von der Ausführungsvariante des Massagegerätes 1 die Bewegung und/oder Verformung und/oder Vibration der in direkten oder indirekten Wirkverbindung mit der jeweiligen Elektromotoreinheit 4.1, 4.2 stehenden Wandung 7 verstanden, welche durch das erfindungsgemäße Verfahren gesteuert wird. Hierbei wird ausgehend von einer Grundintensität entsprechend dem aktuellen Massageverhalten des Benutzers die Intensität der durch eine Elektromotoreinheit erzeugte 4.2 erzeugte Massagebewegung des verwendeten Massagegerätes 1 abhängig von der Belastung der weiteren ersten Elektromotoreinheit entweder erhöht oder erniedrigt, und zwar stufenartig oder kontinuierlich. Bei entsprechender Reduzierung der durch den Benutzer erzeugten mechanischen Krafteinwirkung K kann die Identität der Massagebewegung durch die erfindungsgemäße Steueranordnung 8 auch wieder reduziert werden.

Zur Steuerung der in den Figuren 1 und 2 dargestellten Massagegeräte 1 mit jeweils einer ersten und zweiten Elektromotoreinheit 4.1, 4.2 ist die Steueranordnung 2 derart ausgebildet. Die erste Elektromotoreinheit 4.1 ist über einen Messwiderstand 11 über Schaltmittel 10 mit der Energieversorgungseinheit 9 verbunden. Mittels dem der ersten Elektromotoreinheit 4.1 vorgeschalteten Messwiderstand 11 wird die aktuelle Stromaufnahme der ersten Elektromotoreinheit 4.1 in Form der am Messwiderstand 11 abfallenden Messspannung $U_M$ gemessen und diese als Eingangsspannung einer Verstärkerschaltung 12 geführt. Hierbei ist die Messspannung $U_M$ direkt proportional zur von der ersten Elektromotoreinheit 4.1 abgegebenen elektrischen Leistung.

Die am Eingang der Verstärkerschaltung 12 anliegende Messspannung Um wird in einem vorgegebenen Verhältnis verstärkt und die am Ausgang der Verstärkerschaltung 12 anliegende Spannung bildet die Betriebsspannung U der zweiten Elektromotoreinheit 4.2. Die Einstellung der Verstärkung erfolgt im vorliegenden Ausführungsbeispiel durch die entsprechende Dimensionierung der beiden Widerstände 13, 14 zur Beschaltung des Operationsverstärkers 15. Die vorliegende Ausführungsvariante zeigt beispielhaft eine "nicht-invertierende" Verstärkerschaltung 12. Auch ist die Verstärkerschaltung 12 derart erweiterbar, dass diese beispielsweise mittels eines Potentiometers in einem vorgegebenen Verstärkungsbereich einstellbar ist.

Nach dem Anschalten des Massagegerätes 1 wird die erste und zweite Elektromotoreinheit 4.1, 4.2 zunächst in einem vorgegebenen Startbetriebszustand betrieben. Im Anschluss daran wird die aktuelle elektrische Leistungsaufnahme der ersten Elektromotoreinheit 4.1 periodisch oder kontinuierlich ermittelt. Die Ermittlung der elektrischen Leistungsaufnahme erfolgt gemäß Figur 3 anhand der aktuell gemessenen Stromaufnahme der ersten Elektromotoreinheit 4.1 bzw. des dadurch hervorgerufenen Spannungsabfalls am Messwiderstand 11. Die Messspannung Um wird durch die Verstärkerschaltung 12 wird in dem durch die Schaltungsparameter gegebenen Umfang verstärkt und bildet die angepasste Betriebsspannung U zum Betrieb der zweiten Elektromotoreinheit 4.2

Gemäß der Erfindung kann auch die Steueranordnung 8 auch eine Mikrokontrollereinheit mit einer darin ausgeführten Steuerroutine umfassen, mittels der unterschiedliche Betriebsmodi der ersten und/oder zweiten Elektromotoreinheit 4.1, 4.2 vorgebbar sind. Durch derartige Betriebsmodi sind die zum Betrieb der Elektromotoreinheiten 4.1, 4.2 erforderlichen Betriebsparameter, insbesondere die Betriebsspannungen festgelegt. Es versteht sich, dass unterschiedliche Massagemuster und/oder vorgegebene Massageprogramme auch Teil derartiger Betriebsmodi sein können, die in der Speichereinheit hinterlegt werden und welche abhängig von der Vorgabe des Benutzers und/oder der jeweils vorliegenden elektrischen Leistungsaufnahme auswählbar sind. Beispielsweise kann bei Überschreitung eines vorgegebenen Leistungswertes für eine vorgegebene Zeitdauer ein speziell hierfür abgestimmtes Vibrationsprogramm und/oder eine spezielle Abfolge von Bewegungsmustern durch das Massagegerät 1 erzeugt werden. Auch können beispielsweise die bei Benutzung erzielten Maximalwerte gespeichert werden, um den Massage bzw. Trainingserfolg zu dokumentieren. Diese können dem Benutzer anhand der der Displayeinheit angezeigt werden.

In einer weiteren Ausführungsvariante der Erfindung kann abhängig von der elektrischen Leistungsaufnahme einer ersten Elektromotoreinheit 4 die Intensität der Massagebewegung einer zweiten, nicht in den Figuren dargestellten Elektromotoreinheit geregelt werden und zwar durch Änderung der Betriebsparameter der zweiten Elektromotoreinheit.

Auch kann zur Ermittlung der elektrischen Leistungsaufnahme der effektive Innenwiderstand der ersten Elektromotoreinheit 4.1 bestimmt werden oder bei einer Ansteuerung der ersten Elektromotoreinheit 4.1 mittels eine pulsweitenmodulierten Betriebsspannung in den Zeiten, in denen keine Spannungsamplitude anliegt, die durch die erste Elektromotoreinheit 4.1 induzierte Spannung ermittelt werden und durch dessen Auswertung die elektrische Leistungsaufnahme der ersten Elektromotoreinheit 4.1 bestimmt werden.

Ein Massagegerät 1 gemäß Figur 1 kann beispielsweise zum Training des Beckenbodens des Anwenders verwendet werden, wobei unter dem Beckenboden der bindegewebig-muskulöse Boden der Beckenhöhle bei Menschen oder Tieren verstanden wird. Hierbei kann beispielsweise durch die zweite Elektromotoreinheit 4.2 Massagegerätes 1 ein Vibrationsmuster erzeugt werden, vorzugsweise eine Folge von kurzzeitigen und längeren Vibrationsimpulsen ähnlich einem Morsecode. Bei eingeführten freien Ende 1' des Massagegerätes 1 ist ein entsprechendes Anspannen der Beckenbodenmuskulatur durch den Anwender erforderlich, was zu einem Trainingseffekt der Bodenmuskulatur führt. Ob eine korrekte Anspannung des Anwenders gemäß dem vorgegebenen Vibrationsmuster erfolgt ist, kann über die erste Elektromotoreinheit 4.1 ermittelt werden, und zwar durch die erfindungsgemäße Ermittlung der aktuellen elektrischen Leistungsaufnahme LA der ersten Elektromotoreinheit 4.1 pro Zeit. Durch entsprechende Ausbildung der vorgegebenen Vibrationsmuster kann der Trainingseffekt gesteigert werden, beispielsweise können die Anspanndauer erhöht werden und der Wechsel zwischen kurzen und langen Impulsen variiert werden, um einen höheren Schwierigkeitsgrad für den Anwender bereitzustellen. Gelingt es dem Anwender die vorgegebenen Vibrationsimpulse korrekt nachzubilden, so kann diesem eine Entlohnung in Form einer durch das Massagerät bereitgestellten Massagebewegung zur Verfügung gestellt werden.

Auch kann eine Fernbedienungseinheit vorgesehen sein, welche entweder drahtlos oder drahtgebunden mit der Steueranordnung 8 verbindbar ist und über welche die Steueranordnung 8 bzw. das Massagerät 1 fernbedienbar sind. Vorzugsweise erfolgt die Datenübertragung mittels eine Funkschnittstelle, und zwar beispielsweise WLAN, Bluetooth etc..

Auch können mehrere Massagegeräte 1 über eine vorzugsweise drahtlose Datenschnittstelle die jeweiligen Betriebsdaten austauschen und die Intensität der Massagebewegung des einen Massagegerätes 1 vom Betriebszustand des jeweils anderen Massagegerätes geregelt werden, und zwar unter Verwendung des erfindungsgemäßen Verfahrens.

Ist die Energieversorgungeinheit 9 durch eine Batterieeinheit oder eine Akkueinheit gebildet, so kann der Spannungsabfall oder die die aktuell bereitgestellte Spannung dessen ebenfalls zur Ermittlung der aktuellen Leistungsaufnahme LA der ersten Elektromotoreinheit 4 ausgewertet werden.

Es versteht sich, dass die zuvor genannten Regelkriterien beliebig kombiniert werden können, so könnte zur Ermittlung der aktuellen elektrischen Leistungsaufnahme die aktuelle Stromaufnahme der ersten Elektromotoreinheit 4.1 und/oder der effektive Innenwiderstand der ersten Elektromotoreinheit 4.1 ermittelt und/oder die Drehzahl der ersten Elektromotoreinheit 4.1 und/oder der Spannungsabfall oder die die aktuell bereitgestellte Spannung der Batterieeinheit oder der Akkueinheit ermittelt und ausgewertet wird.

Die Erfindung wurde voranstehend an einem Ausführungsbeispiel beschrieben. Es versteht sich, dass zahlreiche Modifikationen und Änderungen der Erfindung möglich sind, ohne dass hierdurch der Erfindungsgedanke verlassen wird.

**Bezugszeichenliste**

| | |
|---|---|
| 1 | Massagegerät |
| 1' | freies Ende |
| 2, 2.1, 2.2 | Vibratoreinheit |
| 3, 3.1, 3.2 | Gehäuse |
| 4.1 | erste Elektromotoreinheit |
| 4.1' | Unwuchtelement |
| 4.2 | zweite Elektromotoreinheit |
| 4.2' | Unwuchtelement |
| 5 | Antriebswelle |
| 6 | Massageabschnitt |
| 7 | Wandung |
| 8 | Steueranordnung |
| 9 | Energieversorgungseinheit |
| 10 | Schaltmittel |
| 11 | Messwiderstand |
| 12 | Verstärkerschaltung |
| 13 | Widerstand |
| 14 | Widerstand |
| 15 | Operationsverstärker |

| | |
|---|---|
| U | Betriebsspannung |
| $U_M$ | Messspannung |
| L | Längsachse |

**Patentansprüche**

**1.**    Massagegerät (1) mit einer Steueranordnung (8) zur Steuerung der Intensität der Massagebewegung umfassend zumindest einen vorzugsweise länglichen Massageabschnitt (6) mit zumindest einer die Außenfläche des Massageabschnittes (6) bildenden Wandung (7) und zumindest einer ersten elektrischen Antriebseinrichtung mit einer ersten Elektromotoreinheit (4.1) und zumindest einer zweiten Antriebseinrichtung mit einer zweiten Elektromotoreinheit (4.2), die jeweils zur Erzeugung einer Massagebewegung zumindest abschnittsweise direkt oder indirekt mit der Wandung (7) in Wirkverbindung steht, wobei zur Steuerung der Intensität der Massagebewegung die Steueranordnung (8) mit den Elektromotoreinheiten (4.1, 4.2) verbunden ist und die Steueranordnung (8) ausgelegt ist, als Massagebewegung die Intensität der Bewegung und/oder Verformung und/oder Vibration der in direkten oder indirekten Wirkverbindung mit der jeweiligen Elektromotoreinheit (4.1, 4.2) stehenden Wandung (7) die aktuelle elektrische Leistungsaufnahme zumindest der ersten Elektromotoreinheit (4.1) periodisch oder kontinuierlich zu ermitteln und die ermittelte elektrische Leistungsaufnahme mit zumindest einer vorgegebenen Referenzleistungsaufnahme zu vergleichen und abhängig davon die Intensität der durch die zweite Elektromotoreinheit (4.2) erzeugten Massagebewegung zu steuern, wobei hierbei ausgehend von einer Grundintensität entsprechend dem aktuellen Massageverhalten des Benutzers die Intensität der durch die zweite Elektromotoreinheit (4.2) erzeugte Massagebewegung abhängig von der Belastung der ersten Elektromotoreinheit (4.1) entweder erhöht oder erniedrigt wird, und zwar stufenartig oder kontinuierlich.

2. Massagegerät (1) nach Anspruch 1, **dadurch gekennzeichnet, dass** die Steueranordnung (8) ausgelegt ist, die Änderung der elektrischen Leistungsaufnahme, die durch die bei der Massage entstehende direkte oder indirekte mechanische Krafteinwirkung (K) auf die erste Elektromotoreinheit (4.1) hervorgerufen wird, zur Bestimmung der Änderung der Intensität der durch die zweite Elektromotoreinheit (4.2) erzeugten Massagebewegung auszuwerten.

3. Massagegerät (1) nach Anspruch 1 oder 2, **dadurch gekennzeichnet, dass** die Steueranordnung (8) ausgelegt ist, zur Steuerung der Intensität der durch die zweite Elektromotoreinheit (4.2) erzeugten Massagebewegung abhängig vom Vergleichergebnis der ermittelten elektrischen Leistungsaufnahme der ersten Elektromotoreinheit (4.1) mit der zumindest einen vorgegebenen Referenzleistungsaufnahme zumindest ein Betriebsparameter der zweiten Elektromotoreinheit (4.2) zu ändern.

4. Massagegerät (1) nach Anspruch 3, **dadurch gekennzeichnet, dass** die Steueranordnung (8) ausgelegt ist, als Betriebsparameter die Amplitude einer durch eine Gleichspannung gebildeten Betriebsspannung (U) der zweiten Elektromotoreinheit (4.2) zu erhöhen oder zu erniedrigen und/oder als Betriebsparameter das An- zu Ausverhältnis einer pulsweitenmodulierten Betriebsspannung (U) der zweiten Elektromotoreinheit (4.2) zu ändern.

5. Massagegerät (1) nach einem Ansprüche 1 bis 4, **dadurch gekennzeichnet, dass** die Steueranordnung (8) ausgelegt ist, zur Ermittlung der aktuellen elektrischen Leistungsaufnahme die aktuelle Stromaufnahme der ersten Elektromotoreinheit (4.1) zu ermitteln und/oder zur Ermittlung der aktuellen elektrischen Leistungsaufnahme den effektiven Innenwiderstand der ersten Elektromotoreinheit (4.1) zu ermitteln und auszuwerten.

6. Massagegerät (1) nach einem der Ansprüche 1 bis 5, **dadurch gekennzeichnet, dass** die Steueranordnung (8) ausgelegt ist, zur Ermittlung der aktuellen elektrischen Leistungsaufnahme (LA) die Drehzahl der ersten Elektromotoreinheit (4.1) zu ermitteln und auszuwerten.

7. Massagegerät (1) nach Anspruch 6, **dadurch gekennzeichnet, dass** die Steueranordnung (8) ausgelegt ist, die Drehzahl der ersten Elektromotoreinheit (4.1) über eine in Wirkverbindung mit der ersten Elektromotoreinheit (4.1) stehende Drehzahlsensoreinheit zu ermitteln.

8. Massagegerät (1) nach Anspruch 6, **dadurch gekennzeichnet, dass** die Steueranordnung (8) ausgelegt ist, zur Ermittlung der aktuellen elektrischen Leistungsaufnahme (LA) beim Betrieb der ersten Elektromotoreinheit (4.1) mittels einer pulsweitenmodulierten Betriebsspannung (U) in den Auszeiten die von der ersten Elektromotoreinheit (4.1) erzeugte Gegenspannung zu ermitteln und zur Bestimmung der Drehzahl auszuwerten.

9. Massagegerät (1) nach einem der Ansprüche 1 bis 8, **dadurch gekennzeichnet, dass** die Steueranordnung (8) ausgelegt ist, abhängig vom Vergleichsergebnis die zweite Elektromotoreinheit (4.2) in einem der ermittelten elektrischen Leistungsaufnahme zugeordneten Betriebsmodus zumindest zweier Betriebsmodi zu betreiben, wobei einem Betriebsmodus zumindest eine an diesen angepasste Referenzleistungsaufnahme zugeordnet ist.

10. Massagegerät (1) nach einem der Ansprüche 1 bis 8, **dadurch gekennzeichnet, dass** die Steueranordnung (8) ausgelegt ist, bei einer Energieversorgung des Massagegerätes (1) mittels einer Batterieeinheit oder einer Akkueinheit den Spannungsabfall oder die aktuell bereitgestellte Spannung der Batterieeinheit oder der Akkueinheit zur Ermittlung der aktuellen Leistungsaufnahme (LA) der Elektromotoreinheit (4) auszuwerten.

11. Massagegerät (1) nach einem der Ansprüche 1 bis 10, **dadurch gekennzeichnet, dass** die Steueranordnung (8) eine Verstärkerschaltung (12) zur Steuerung der Intensität der Massagebewegung des Massagegerätes (1) aufweist und/oder dass die Steueranordnung (8) zumindest eine vorzugsweise drahtlose Datenschnittstelle, beispielsweise eine Funkdatenschnittstelle zum Austauch von Betriebsdaten und zur davon abhängigen Steuerung der Intensität der Massagebewegung eines weiteren Massagegerätes (1) aufweist.

12. Massagegerät (1) nach einem der Ansprüche 1 bis 11, **dadurch gekennzeichnet, dass** die Steueranordnung (8) eine Mikrokontrollereinheit (12) zur Ausführung einer Steuerroutine zur Steuerung der Intensität der Massagebewegung eines Massagegerätes (1) aufweist.

**Claims**

1. Massage device (1) with a control assembly (8) for controlling the intensity of the massage movement comprising at least a preferably elongated massage section (6) with at least a wall (7) forming the outer surface of the massage section (6) and at least a first electric drive mechanism with a first electric motor unit (4.1) and at least a second drive mechanism with a second electric motor unit (4.2), which are respectively operatively connected at least in sections directly or indirectly to the wall (7) for the generation of a massage movement, wherein, for control of the intensity of the massage movement, the control assembly (8) is connected to the electric motor units (4.1, 4.2) and the control assembly (8) is designed to determine the intensity of the movement and/or deformation and/or vibration of the wall (7) operatively connected directly or indirectly to the respective electric motor units (4.1, 4.2) as a massage movement the current electric power consumption at least of the first electric motor unit (4.1) periodically or continuously and to compare the determined electric power consumption with at least one predetermined reference power consumption and, as a function thereof, to control the intensity of the massage movement generated by the second electric motor unit (4.2), wherein, starting from a basic intensity corresponding to the current massage behaviour of the user, the intensity of the massage movement generated by the second electric motor unit (4.2) is either increased or decreased as a function of the load of the first electric motor unit (4.1), namely by degrees or continuously.

2. Massage device (1) according to claim 1, **characterized in that** the control assembly (8) is designed to evaluate the change in electric power consumption caused by the direct or indirect mechanical force (K) acting on the first electric motor unit (4.1) during the massage in order to determine the change in intensity of the massage movement generated by the second electric motor unit (4.2).

3. Massage device (1) according to claim 1 or 2, **characterized in that** the control assembly (8) is designed to change at least one operating parameter of the second electric motor unit (4.2) in order to control the intensity of the massage movement generated by the second electric motor unit (4.2) as a function of the result of the comparison of the determined electric power consumption of the first electric motor unit (4.1) with the at least one predetermined reference power consumption.

4. Massage device (1) according to claim 3, **characterized in that** the control assembly (8) is designed to increase or decrease the amplitude of an operating voltage (U), constituted by a direct voltage, of the second electric motor unit (4.2) as the operating parameter and/or to change the on/off ratio of a pulse-width modulated operating voltage (U) of the second electric motor unit (4.2) as the operating parameter.

5. Massage device (1) according to one of claims 1 to 4, **characterized in that** the control assembly (8) is designed to determine the current current consumption of the first electric motor unit (4.1) in order to determine the current electric power consumption and/or to determine and evaluate the effective internal resistance of the first electric motor unit (4.1) in order to determine the current electric power consumption.

6. Massage device (1) according to one of claims 1 to 5, **characterized in that** the control assembly (8) is designed to determine and evaluate the rotational speed of the first electric motor unit (4.1) in order to determine the current electric power consumption (LA).

7. Massage device (1) according to claim 6, **characterized in that** the control assembly (8) is designed to determine the rotational speed of the first electric motor unit (4.1) via a rotational-speed sensor unit operatively connected to the first electric motor unit (4.1).

8. Massage device (1) according to claim 6, **characterized in that** the control assembly (8) is designed, in order to determine the current electric power consumption (LA) when the first electric motor unit (4.1) is operated by means of a pulse-width modulated operating voltage (U), to determine the reverse voltage generated by the first electric motor unit (4.1) in the off states and to evaluate the same in order to determine the rotational speed.

9. Massage device (1) according to one of claims 1 to 8, **characterized in that** the control assembly (8) is designed to operate, as a function of the result of the comparison, the second electric motor unit (4.2) in an operating mode, of at least two operating modes, associated with the determined electric power consumption, wherein at least one respectively adjusted reference power consumption is associated with an operating mode.

10. Massage device (1) according to one of claims 1 to 8, **characterized in that** the control assembly (8) is designed, when energy is supplied to the massage device (1) by means of a battery unit or an accumulator unit, to evaluate the voltage drop or the currently provided voltage of the battery unit or accumulation unit in order to determine the current power consumption (LA) of the electric motor unit (4).

11. Massage device (1) according to one of claims 1 to 10, **characterized in that** the control assembly (8) includes an amplifier circuit (12) for controlling the intensity of the massage movement of the massage device (1) and/or **in that** the control assembly (8) includes at least one preferably wireless data interface, for example a radio data interface for exchanging operating data and for controlling, as a function of the latter, the intensity of the massage movement of a further massage device (1).

12. Massage device (1) according to one of claims 1 to 11, **characterized in that** the control assembly (8) includes a microcontroller unit (12) for executing a control routine for controlling the intensity of the massage movement of a massage device (1).

## Revendications

1. Appareil de massage (1) pourvu d'un ensemble de commande (8) destiné à commander l'intensité du mouvement de massage, comprenant au moins une partie massante (6), de préférence allongée, dotée d'au moins une paroi (7) formant la surface extérieure de la partie massante (6) et d'au moins un premier système d'entraînement électrique avec une première unité de moteur électrique (4.1) et d'au moins un deuxième système d'entraînement avec une deuxième unité de moteur électrique (4.2), qui respectivement pour générer un mouvement de massage est en liaison active directe ou indirecte, au moins par endroits avec la paroi (7), pour commander l'intensité du mouvement de massage, l'ensemble de commande (8) étant connecté avec les unités de moteur électrique (4.1, 4.2) et pour commander en tant que mouvement de massage l'intensité du mouvement et/ou de la déformation et/ou de la vibration de la paroi (7) se trouvant en liaison active directe ou indirecte avec l'unité de moteur électrique (4.1, 4.2) en question, l'ensemble de commande (8) étant conçu pour déterminer périodiquement ou en continu la puissance absorbée électrique actuelle au moins de la première unité de moteur électrique (4.1) et pour comparer la puissance absorbée électrique déterminée avec au moins une puissance absorbée de référence prédéfinie et pour commander en fonction l'intensité du mouvement de massage créé par la deuxième unité de moteur électrique (4.2), à cet effet, en partant d'une intensité de base, en fonction de comportement de massage actuel de l'utilisateur, l'intensité du mouvement de massage généré par la deuxième unité de moteur électrique (4.2) étant soit relevée ou réduite, à savoir graduellement ou en continu, en fonction de la charge de la première unité de moteur électrique (4.1).

2. Appareil de massage (1) selon la revendication 1, **caractérisé en ce que** l'ensemble de commande (8) est conçu pour évaluer la variation de la puissance absorbée électrique, qui est suscitée par l'action mécanique directe ou indirecte de la force (K) due au massage sur la première unité de moteur électrique (4.1) pour déterminer la variation de l'intensité du mouvement de massage généré par la deuxième unité de moteur électrique (4.2).

3. Appareil de massage (1) selon la revendication 1 ou 2, **caractérisé en ce que** pour commander l'intensité du mouvement de massage généré par la deuxième unité de moteur électrique (4.2), l'ensemble de commande (8) est conçu pour faire varier, en fonction du résultat de la comparaison de la puissance absorbée électrique déterminée de la première unité de moteur électrique (4.1) avec l'au moins une puissance absorbée de référence prédéfinie au moins un paramètre de service de la deuxième unité de moteur électrique (4.2).

4. Appareil de massage (1) selon la revendication 3, **caractérisé en ce que** l'ensemble de commande (8) est conçu pour élever ou réduire en tant que paramètre de service l'amplitude d'une tension de service (U) de la deuxième unité de moteur électrique (4.2) formée par une tension continue et/ou pour faire varier en tant que paramètre de service le rapport marche à arrêt d'une tension de service (U) à impulsions modulées de la deuxième unité de moteur électrique (4.2).

5. Appareil de massage (1) selon l'une quelconque des revendications 1 à 4, **caractérisé en ce que** pour déterminer la puissance absorbée électrique actuelle, l'ensemble de commande (8) est conçu pour déterminer la consommation de courant actuelle de la première unité de moteur électrique (4.1) et/ou pour la détermination de la puissance absorbée électrique actuelle, pour déterminer et évaluer la résistance interne effective de la première unité de moteur électrique (4.1).

6. Appareil de massage (1) selon l'une quelconque des revendications 1 à 5, **caractérisé en ce que**, pour la détermination de la puissance absorbée électrique (LA) actuelle, l'ensemble de commande (8) est conçu pour déterminer et évaluer le régime de la première unité de moteur électrique (4.1).

7. Appareil de massage (1) selon la revendication 6, **caractérisé en ce que** l'ensemble de commande (8) est conçu pour déterminer la vitesse de rotation de la première unité de moteur électrique (4.1) par l'intermédiaire d'une unité de capteur de vitesse de rotation qui est en liaison active avec la première unité de moteur électrique (4.1).

8. Appareil de massage (1) selon la revendication 6, **caractérisé en ce que** pour la détermination de la puissance absorbée électrique (LA) actuelle, en service de la première unité de moteur électrique (4.1) au moyen d'une tension de service (U) à impulsions modulées, l'ensemble de commande (8) est conçu pour déterminer pendant les temps morts, la contre-tension générée par la première unité de moteur électrique (4.1) et pour l'évaluer, pour la détermination de la vitesse de rotation.

9. Appareil de massage (1) selon l'une quelconque des revendications 1 à 8, **caractérisé en ce que** l'ensemble de commande (8) est conçu, en fonction du résultat de la comparaison, pour faire fonctionner la deuxième unité de moteur électrique (4.2) dans un mode de fonctionnement associé à la puissance absorbée électrique déterminée parmi au moins deux modes de fonctionnement, à un mode de fonctionnement étant associée au moins une puissance absorbée de référence adaptée à celui-ci.

10. Appareil de massage (1) selon l'une quelconque des revendications 1 à 8, **caractérisé en ce que** l'ensemble de commande (8) est conçu, lors d'une alimentation en énergie de l'appareil de massage (1) au moyen d'une unité de batterie ou d'une unité d'accu, pour évaluer la chute de tension ou la tension actuelle mise à disposition par l'unité de batterie ou l'unité d'accu, pour la détermination de la puissance absorbée (LA) actuelle de l'unité de moteur électrique (4).

11. Appareil de massage (1) selon l'une quelconque des revendications 1 à 10, **caractérisé en ce que** l'ensemble de commande (8) comporte un circuit amplificateur (12), destiné à commander l'intensité du mouvement de massage de l'appareil de massage (1) et/ou **en ce que** l'ensemble de commande (8) comporte au moins une interface de données, de préférence sans fil, par exemple une interface de données radio, destinée à échanger des données de service et à commander en fonction de celles-ci l'intensité du mouvement de massage d'un appareil de massage (1) supplémentaire.

12. Appareil de massage (1) selon l'une quelconque des revendications 1 à 11, **caractérisé en ce que** l'ensemble de commande (8) comporte une unité de microcontrôleur (12), destinée à exécuter une routine de commande pour commander l'intensité du mouvement de massage d'un appareil de massage (1).

**Fig. 1**

EP 2 903 581 B1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2364687 A1
- US 20090306467 A1

- DE 200050475 U1